# EUROPEAN PATENT APPLICATION

(11) **EP 3 736 251 A1**
(43) Date of publication of application: **11.11.2020**
(21) Application number: 19461534.0
(22) Date of filing: 07.05.2019
(51) Int. Cl.: C01B 32/19

(54) **METHOD OF MANUFACTURING FLAKE GRAPHENE**

(71) Applicant: NanoEMI sp.z o.o., 20-262 Lublin (PL); POLITECHNIKA WARSZAWSKA, 00-661 Warszawa (PL)
(72) Inventor: Duzynska, Anna, 01-132 Warszawa (PL); Zdrojek, Mariusz, 02-798 Warszawa (PL); Wroblewska, Anna, 05-119 Lajski (PL); Lapinska, Anna, 01-234 Warszawa (PL)
(74) Representative: AOMB Polska Sp. z.o.o.

(57) **Abstract**

The invention is related to a method of manufacturing flake graphene in a liquid phase exfoliation process of graphite in oil.

## Description

### Field of the Invention

The object of the invention is an efficient method of manufacturing flake graphene in a liquid phase exfoliation process of graphite in oil.

### Prior Art

Graphene is one of allotropic forms of carbon. It consists of a single layer of carbon atoms forming a hexagonal lattice. The atoms within the plane are connected by strong bonds of sp² hybridization. In case of structures consisting of two or more graphene layers (graphite), individual layers are connected together by weak van der Waals forces. Due to a number of interesting properties (e.g. high electrical and thermal conductivity, high charge mobility, tensile strength and chemical resistance) graphene is applicable for the production of various types of electronic, optoelectronic and composite systems. However, the graphene manufacturing methods presently existing on the market are still complex and expensive, which significantly limits the scope of potential graphene applications. Nowadays, the development of graphene production methods, which would result in both increased efficiency and reduced costs, is essential for the future of implementations based on this carbonic material.

In general, liquid phase exfoliation method is a well-known technique of manufacturing graphene flakes of good quality directly in suspension, allowing at the same time to scale up the production process from laboratory to industrial quantities [Current Opinion in Colloid & Interface Science 20, 311 (2015), Nature Materials 13, 624 (2014)]. It is based on exfoliating of graphene layers from graphite crystals in a properly selected solvent. In this method, the exfoliation process may be triggered by various mechanisms, i.e. ion intercalation, ion exchange, mixing by shearing forces, sonication or anomalous thermal expansion of water.

PL 229934 B1 discloses the use of anomalous thermal expansion of water, which increases its volume when freezing. This effect allows to use a water solution with a surface active agent (fluorinated alcohol-substituted glycol) enabling the water molecules to penetrate between the layers in graphite, which is then frozen (using liquid nitrogen) and dried. As a result a suspension is obtained that contains graphene flakes. In addition, the graphite used in the method is pre-intercalated with acids, and thermally expanded. The publication contains no description of efficiency of the exfoliation process or the purity of the obtained graphene suspension.

Furthermore, in US 20180312404 A1 a method is presented of manufacturing two-dimensional materials, including graphene flakes, by mixing layered material particles with a selected carrier liquid, followed by compressing the mixture and injecting it into a microflow channel under a pressure suitable to trigger the exfoliation effect. The method can be carried out using a microfluidizer. The proposed carrier liquids include, inter alia, water, alcohol, N-methylpyrrolidone, chloroform, and benzene, whereby the carrier liquid can optionally contain a polymeric matrix such as epoxy resin or a silicone oil. The final product is a suspension of flakes of the selected two-dimensional material dispersed in the given medium.

WO 2015193268 A1 proposes a method of manufacturing graphene nanoflakes that involves pre-treatment based on the expansion of intercalated graphite flakes in high temperature plasma. Next, the expanded graphite is dissolved in a selected medium, e.g. in water, organic solvent, mineral oil, vegetable oil, natural or synthetic polymer. Applied mineral oils include the following: aromatic mineral oils, including petroleum oils, paraffinic mineral oils, ester-based synthetic oils and ether-based synthetic oils. In the following step the mixture is subjected to exfoliation process by high-pressure homogenization, and pumped through at least one microchannel at a pressure above 35 MPa.

Nano Letters 16, 543 (2016) discloses that the mechanisms of intercalation and ion exchange can be used for graphene exfoliation. Ions present in the liquid penetrate between adjacent layers of the material, thereby increasing the distance between them and weakening the bonds, further leading to complete separation of the layers (in case of ion exchange, smaller ions already present between the layers are replaced by larger ones). The publication provides no information about the efficiency or the possibilities of implementing the mechanism.

Authors of an article published in Nature Materials 13, 624 (2014) presented a method for flake graphene production involving mixing graphite crystals in a liquid at a high speed so as to generate shearing forces that weaken van der Waals bonds and result in graphite delamination. The authors also showed a possibility of employing ultrasounds (instead of mixing) to trigger the exfoliation process. The exfoliation process as described takes place in an aqueous solution with the addition of surfactants (N-methyl-2-pyrrolidone, sodium chlorate). This method makes it possible to produce mono- and multi-layered graphene. The maximum concentration of the produced graphene in the solution does not exceed 0.08 mg/ml per hour.

Techniques of intercalation and ion exchange are applicable mainly for producing of lithium-ion batteries due to residues of the used ions in the final product. Further, in the processes of mixing by shearing forces and sonication, the efficiency strictly depends on the selection of appropriate solvent [Accounts of Chemical Research 46, 14 (2013)]. In particular, it is important to match the liquid surface tension to the material surface energy. According to the literature, the most commonly used solvent is N-methylpyrrolidone (NMP) having a surface tension of the order of ∼40 mN/m [Nature Materials 13, 624 (2014)], among other substances such as dichlorobenzene (DCB) [Digest Journal of Nanomaterials and Biostructures 11, 277 (2016)], dimethylformamide (DMF) [Current Opinion in Colloid & Interface Science 20, 367 (2015)] and tetrahydrofuran (THF) [Current Opinion in Colloid & Interface Science 20, 367 (2015)] having comparable surface tension coefficients. These substances ensure effective exfoliation of graphene flakes and formation of stable graphene suspensions. Unfortunately, they are expensive and highly toxic to both humans and the environment, and the production process of graphene flakes using these solvents is inefficient (0.1 < mg/mL per hour) and requires special precautions to be taken, which significantly increases the costs. Furthermore, in case of the most commonly used solvent, i.e. NMP, appropriate cooling systems must be used, preventing from excessive increase of the liquid temperature, so as to maintain optimal parameters of exfoliation [Nature Materials 13, 624 (2014)], which also increases production costs.

Accordingly, an inexpensive, clean and efficient method of manufacturing flake graphene is needed, which would use only safe and easily available solvents, without using additional chemical reagents.

### Summary of the Invention

The subject-matter of the invention is a method of manufacturing flake graphene by liquid phase exfoliation of graphite particles, comprising preparing a suspension of graphite particles in a solvent and mixing thereof until a suspension of graphene flakes in the solvent is obtained, from which unexfoliated graphite particles are then removed, whereby in the method oil having a surface tension of 39 to 42 mN/m at room temperature, and preferably castor oil having surface tension 39 mN/m at 20°C [Energy Procedia 57, 886 (2014)], is used as the solvent. Castor oil is non-toxic and relatively inexpensive, which are its advantages compared to the solvents used to date.

In the method according to the invention, crystals of graphite of any type can be used as graphite particles.

Preferably, in the method according to the invention, the suspension of graphite particles in the solvent is mixed by sonication or by mixing by shearing forces.

Preferably, the method according to the invention is carried out at a temperature above 45°C.

Preferably, in the method according to the invention, the unexfoliated graphite particles are removed from the suspension of graphene flakes in the solvent by long-lasting gravitational fall or by means of an angular centrifuge operating at a rotational speed of at least 4,000 rpm.

Preferably, in the method according to the invention, the suspension of graphene flakes in the solvent, once unexfoliated particles of graphite are removed from it, is filtered and washed to isolate graphene flakes from the suspension.

The method of manufacturing flake graphene from graphite particles by liquid exfoliation according to the invention using castor oil as the solvent is preferably carried out in the following manner. Pure (i.e. requiring no preparation) particles of graphite in loose form are added to castor oil. To start the exfoliation process, the entire material is sonicated or mixed by shearing forces. To perform the method effectively, the procedure is carried out at a temperature above 45°C. Both sonication and mixing by shearing forces result in an increase of the mixture temperature as a result of friction forces between individual layers of the liquid. It is a desirable effect for the method efficiency, contributing to solvent density reduction and thereby ensuring more efficient exfoliation of graphite particles. Accordingly, there is no need to use additional cooling systems. However, in case low-power sonication devices (> 37 kHz) or mixer heads generating no high friction forces between the liquid layers are used, the entire mixture must be heated up to a temperature of 45°C or higher. After the exfoliation process either long-lasting gravitational fall or an angular centrifuge operating at a rotational speed of ≥ 4,000 rpm is used to remove unexfoliated graphite particles from the suspension. The final suspension of graphene flakes in castor oil at room temperature shows long-term stability (over 6 months).

Oils having a surface tension of 39 to 42 mN/m at room temperature, and in particular castor oil, have proven to be effective and beneficial substitutes for the solvents used to date to exfoliate graphite in the wet method. The method according to the invention allows to obtain good quality graphene flakes with an average thickness of a few to several dozen atomic layers and a surface area ranging from 4 to 400 µm². The range of thickness and surface area of graphene flakes in the suspension can be controlled by the exfoliation process duration (extending the time results in obtaining thinner flakes with a smaller surface area) and by the rotational speed of the suspension in the angular centrifuge (the higher the speed, the smaller the flakes). Moreover, the test results of the obtained samples indicate an insignificant presence of defects in the structure of graphene.

The method according to the invention is characterized by an efficiency of graphene flakes formation exceeding 0.7 mg/ml per hour, which is a value higher than in case of previous methods.

### Brief Description of the Figures

The subject-matter of the invention is presented in more detail in the following exemplary embodiments as well as in figures, in which:
Fig. 1a and 1b show images taken with a scanning electron microscope (SEM) of a film of graphene flakes obtained by vacuum filtration from a suspension manufactured according to the invention;
Fig. 2 shows a Raman spectrum of a film of graphene flakes obtained by vacuum filtration from a suspension manufactured according to the invention;
Fig. 3a shows an image taken with an atomic force microscope (AFM) of graphene flakes obtained according to the invention, on a SiO₂/Si substrate;
Fig. 3b shows cross-sectional profiles of selected flakes of Fig. 3a.

### Examples

### Example 1

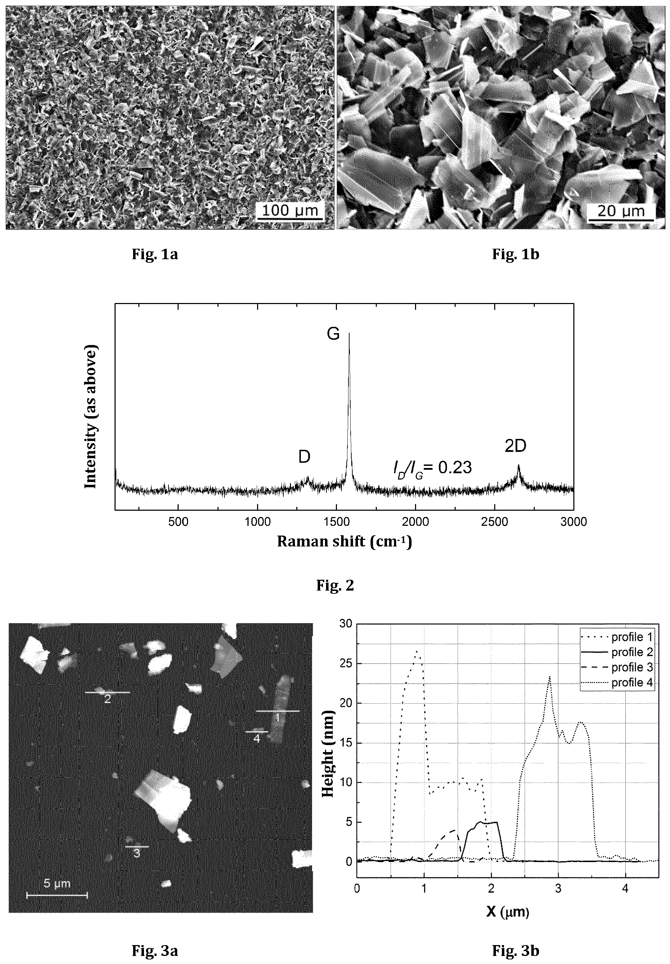

10 g of pure graphite monocrystals was added to 100 ml of castor oil. The mixture was sonicated at a frequency of 37 kHz and power of 400 W in an ultrasonic cleaner at a temperature of 60°C for 10 hours. Next, in order to separate the exfoliated graphene layers from the unexfoliated graphite crystals, the suspension was centrifuged in an angular centrifuge at a speed of 4,000 rpm for 30 minutes. To assess the quality of the manufactured graphene flakes, the supernatant was poured off and filtered. Filtration process allowed to separate the graphene flakes from the castor oil. A vacuum filtration set and filters made of mixed cellulose esters having pores sized 0.450 µm (Millipore) were used. After filtering the suspension, a film of graphene flakes formed on the filter was washed with a large amount of isopropyl alcohol so as to remove castor oil residues. The layer was then dried and characterised. First of all, a concentration of the manufactured graphene flakes per 1 ml of the solvent used was determined. For this purpose, the cellulose filter used was weighed before and after the vacuum filtration process. The obtained difference in mass was divided by the filtered mixture volume. The resulting concentration of graphene flakes was 0.821 mg/ml. Moreover, surface morphology of the formed layer of graphene flakes was tested by means of scanning electron microscope (SEM) imaging (Fig. 1a and 1b). The SEM images confirmed the presence of graphene flakes having an average surface area of 4 to 400 µm². Further, a Raman spectra analysis (Fig. 2) registered for the laser wavelength of λ = 785 nm, showed no additional bands within the layer that might indicate sample contamination originating e.g. from the solvent used. Only the characteristic bands occurring for graphene layers, i.e. D, G, and 2D, are observed in the spectrum. Quality of the manufactured graphene flakes is confirmed by low intensity of the D peak (Fig. 2). It occurs in the Raman spectrum as a result of defects in the graphene structure (including the edges), or impurities. Low ratio of the D-band intensity to the G-band intensity (ID/IG = 0.23) indicates a little number of defects in the flakes. Further, the relatively low 2D-band intensity may result from the fact that the Raman spectrum is recorded for a layer consisting of numerous graphene flakes rather than for an isolated graphene monolayer. The exact size of obtained flakes, and in particular their thickness, was determined based on imaging by an atomic force microscope (AFM). For this purpose, the graphene flakes purified in a vacuum filtration process were dispersed in isopropyl alcohol, and the resulting suspension was applied dropwise onto a silicon substrate covered with an insulating layer of silicon dioxide (SiO₂/Si). Once the alcohol evaporated, the ready sample was subjected to AFM imaging. An exemplary photo is shown in Fig. 3a, and the cross-sectional profiles of selected graphene flakes are shown in Fig. 3b. Thicknesses of the measured graphene flakes range from 4 to slightly more than 25 nm (i.e. from about 11 to 73 graphene layers).

### Example 2

20 g of pure graphite monocrystals was added to 400 ml of castor oil. The entire material was mixed in an Admix mixer with a rotor/stator head at a rotational speed of 7,000 rpm for 20 minutes, and 12,000 rpm for 30 minutes. Once the process was completed, the mixture temperature was measured and it was ∼50°C. Similarly as in the Example 1, in order to separate the exfoliated graphene layers from the unexfoliated graphite crystals, the suspension was centrifuged in an angular centrifuge (4,000 rpm for 30 min) and then the supernatant was filtered off to separate the graphene flakes from the solvent. The concentration of graphene flakes in the suspension was determined at a level of 0.749 mg/ml. A SEM analysis, AFM, and Raman spectroscopy for the formed graphene flakes yielded results comparable to the sample obtained according to the procedure described in the Example 1.

## Claims

1. A method of manufacturing flake graphene by liquid phase exfoliation of graphite particles, comprising preparing of a suspension of graphite particles in a solvent and mixing thereof until a suspension of graphene flakes in the solvent is obtained, from which unexfoliated graphite particles are then removed, **characterised in that** oil having a surface tension of 39 to 42 mN/m at room temperature is used as the solvent.

2. The method according to claim 1, wherein castor oil is used as the solvent.

3. The method according to claim 1 or 2, wherein crystals of graphite of any type are used as graphite particles.

4. The method according to one of the claims 1-3, wherein the suspension of graphite particles in the solvent is mixed by sonication or by mixing by shearing forces.

5. The method according to one of the claims 1-4, which is carried out at a temperature above 45°C.

6. The method according to one of the claims 1-5, wherein the unexfoliated graphite particles are removed from the suspension of graphene flakes in the solvent by long-lasting gravitational fall or by means of an angular centrifuge operating at a rotational speed of at least 4,000 rpm.

7. The method according to one of the claims 1-6, wherein the suspension of graphene flakes in the solvent, once unexfoliated particles of graphite are removed from it, is filtered and washed to isolate graphene flakes from the suspension.
